Europäisches Patentamt

European Patent Office

Office européen des brevets

(11) Veröffentlichungsnummer: **0 019 051**
**B1**

# (12) EUROPÄISCHE PATENTSCHRIFT

(45) Veröffentlichungstag der Patentschrift:
12.05.82

(21) Anmeldenummer: 80101304.6

(22) Anmeldetag: 13.03.80

(51) Int. Cl.³: **G 03 B 21/64**

(54) Diarahmen mit profilierten Randabschnitten.

(30) Priorität: 21.03.79 DE 2911089

(43) Veröffentlichungstag der Anmeldung:
26.11.80 Patentblatt 80/24

(45) Bekanntmachung des Hinweises auf die Patenterteilung:
12.05.82 Patentblatt 82/19

(84) Benannte Vertragsstaaten:
BE CH FR GB IT SE

(56) Entgegenhaltungen:
DE-A-1 797 286
DE-A-2 045 278
DE-B1-2 517 008
FR-A-1 066 581

(73) Patentinhaber: **AGFA-GEVAERT Aktiengesellschaft,
Leverkusen, Camerawerk Postfach,
D-8000 München 90 (DE)**

(72) Erfinder: **Sylla, Jürgen, Amselweg 18,
D-8029 Sauerlach-Arget. (DE)**
Erfinder: **Neudecker, Karl, Helmgartenstrasse 4,
D-8000 München 90 (DE)**

Diarahmen mit profilierten Randabschnitten

Die Erfindung betrifft Diarahmen mit längs der Rahmenkanten vorgesehenen profilierten Randabschnitten, die eine die Rahmenkante bildende Rippe und eine dazu parallele umlaufende Nut aufweisen.

Ein derartiger Diarahmen wurde schon gemäß der nicht vorveröffentlichten DE-AS 2 817 005 vorgeschlagen. Diarahmen dieser Art müssen mit besonderer Achtsamkeit mit ihren profilierten Randabschnitten in komplementäre Nuten bzw. Rippen eines zugeordneten Diamagazins eingesetzt werden.

Durch die DE-OS 1 797 265 ist ein Diarahmen bekanntgeworden, dessen umlaufender Rand durch eine Rippe von der Dicke der normalen Diarahmen gebildet wird, wobei sich hieran nach innen eine oder mehrere umlaufende Nuten und dazwischenliegende weitere Rippen anschließen. Diese Anordnung von Rippen und Nuten dient ausschließlich der Gewichtsverminderung des Rahmens und der Materialersparnis. Wegen ihrer umlaufenden Gestalt sind die Rippen und Nuten nicht für eine formschlüssige Haltung der Diarahmen in einem Magazin geeignet.

Der vorliegenden Erfindung liegt daher die Aufgabe zugrunde, einen Diarahmen der eingangs genannten Art so auszubilden, daß er mühelos und ohne besondere Sorgfalt in ein zugeordnetes Magazin einsetzbar ist und sich beim Einsetzen selbst ausrichtet.

Diese Aufgabe wird erfindungsgemäß durch die Merkmale des Hauptanspruchs gelöst. Weitere, zur Verbesserung der Lösung dieser Aufgabe vorteilhafte Merkmale sind den Unteransprüchen entnehmbar.

Die Erfindung wird anhand von Zeichnungen näher erläutert. Es zeigt

Fig. 1 eine Ansicht eines erfindungsgemäßen Diarahmens in Blickrichtung auf eine Flachseite,

Fig. 2 eine Ansicht einer Kante des Diarahmens nach Fig. 1,

Fig. 3 einen vergrößert dargestellten Schnitt durch den Diarahmen nach Fig. 1 gemäß der Schnittlinie III-III,

Fig. 4 einen vergrößert dargestellten Schnitt durch den Diarahmen nach Fig. 1 gemäß der Schnittlinie IV-IV.

In den Figuren sind ein einen hochstehenden, umlaufenden Rand 1a aufweisendes Unterteil eines Diarahmens mit 1 und ein in das Unterteil 1 einzulegendes Oberteil mit 2 bezeichnet, wobei zwischen den beiden, je einen Bildausschnitt 1b, 2a aufweisenden Rahmenteilen 1, 2 ein zu rahmendes Diapositiv zu lagern ist. Es wäre aber grundsätzlich auch möglich, statt des als Ausführungsbeispiel gewählten zweiteiligen Diarahmens mit in das Unterteil eingelegtem Oberteil einen einteiligen Diarahmen oder einen aus zwei gleichen, miteinander verbundenen oder verbindbaren Halbschalen bestehenden Diarahmen vorzusehen, da die vorliegende Erfindung grundsätzlich auf jeden bekannten Diarahmentyp anwendbar ist.

Der Randabschnitt des Diarahmens 1, 2 ist zumindest längs einer Seite, vorzugsweise längs aller vier Rahmenseiten, als Profilstück ausgebildet, das eine nicht bis in die Rahmenecken reichende Rippe 1c aufweist, deren Dicke d an der äußeren Rahmenkante etwa gleich der Dicke c des eigentlichen Diarahmens 1, 2 selbst ist. An die Rippe 1c schließen sich zum Rahmeninneren hin in die beiden Rahmenflachseiten reichende, zur Rippe 1c parallele Nuten 1d an, die sich bis in die Rahmenecken erstrecken, so daß die Dicke der Rahmenecken nur der zwischen den beiden Nuten 1d verbleibenden Rahmenstärke entspricht. Der Querschnitt des Profilstücks 1c, 1d im Rahmenrandbereich längs einer Rahmenseite hat also etwa T-förmigen Querschnitt, wobei die Nuten zur Verbesserung der Spritzbarkeit und der Verminderung eines Verhakens von Rippen eines Rahmens mit Nuten eines anderen Rahmens trapezförmigen Querschnitt haben können und die kürzere der parallelen Trapezseiten am Boden der Nut 1d liegt. Somit liegt die längere der parallelen Seiten des trapezförmigen Querschnitts der Nuten 1d in oder an den Oberflächen des Diarahmens 1, 2.

Um beim losen Stapeln der Rahmen 1, 2 zu verhindern, daß Rippen 1c eines Rahmens in Nuten 1d eines anderen Rahmens eingreifen und sich hierbei ineinander verhaken können, ist außerdem vorgesehen, daß die Breite a der in den Rahmenoberflächen liegenden Rippenflächen mindestens gleich, vorzugsweise aber größer ist als die Breite b der Nuten 1d an der Oberfläche des Diarahmens.

Liegen Diarahmen dieser Ausgestaltung in Stapeln flach aufeinander, so können die Rippen 1c eines Rahmens nicht in die Nuten 1d eines anderen Rahmens eingreifen, weil die Rippen breiter als die Nuten sind, so daß sich die Rahmen 1, 2 nicht ineinanderschieben oder verhaken können. Aber auch, wenn beim Einsetzen in Stapelbehälter oder beim Entnehmen der Rahmen hieraus ein Rahmen schräg mit einer seiner Rippen auf eine Nut eines anderen Rahmens trifft und insoweit die Rippe teilweise in die Nut eingreifen kann, ist ein Verhaken der Rahmen durch die Schrägflächen des trapezförmigen Profils der Nuten vermieden, an denen eine in eine Nut schräg eingreifende Rippe des schräg zugeführten Rahmens wieder herausgleitet.

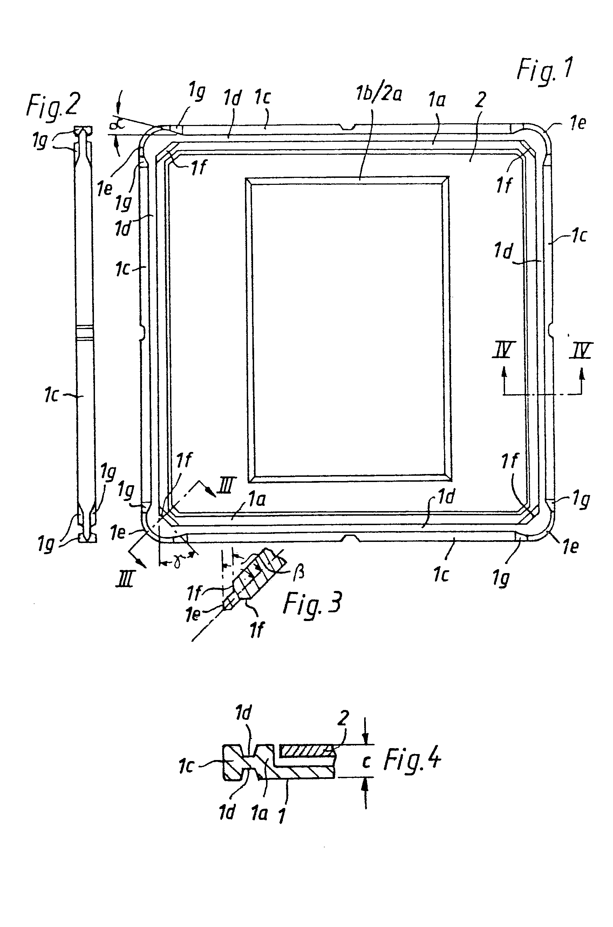

Eine weitere Besonderheit des Rahmens 1 besteht darin, daß seine Kanten im Bereich der verdünnten Ecken das Profil pfeilförmig nach außen weisender Spitzen 1e haben, vgl. Fig. 3, deren Schrägflächen vorzugsweise unter einem Winkel $\beta$ von 45° gegen die Rahmenmittelebene geneigt sind. Der Rand 1a ist im Bereich der Ecken unter einem Winkel $\gamma$ von 45° gegen die Rahmenseiten abgeschnitten, wie aus Fig. 1 ersichtlich ist. Dabei wird der Übergang vom Rand 1a zu den verdünnten Ecken ebenfalls durch pfeilförmig gegen die Rahmenecken verlaufende Schrägflächen 1f gebildet, wie Fig. 3 entnehmbar ist. Auch der Winkel zwischen den Schrägflächen 1f und der Rahmenmittelbahn beträgt vorzugsweise $\beta$ gleich 45°. Schließlich wird der Übergang von den Rippen 1c zu den verdünnten Ecken durch Keil- oder Kegelflächen 1g gebildet, die einerseits trichterförmige Erweiterungen der Nuten 1d zu den Ecken hin unter einem Winkel $\alpha$ und andererseits Abschrägungen von den erhöhten Rippen 1c zu den verdünnten Ecken hin bilden.

Auch diese Abschrägungen 1e, 1f, 1g bewirken einerseits, daß beim Ineinanderschieben der verdünnten Ecken verschiedener Rahmen sich diese nicht verkanten oder verklemmen können. Vor allem aber wird hierdurch erreicht, daß beim Einsetzen eines Rahmens 1 in ein Magazin mit zu den Profilkanten 1c, 1d des Rahmens komplementären Rippen und Nuten durch die Schrägflächen 1e, 1f, 1g eine Ausrichtung der rahmenseitigen Rippen und Nuten auf die komplementären magazinseitigen Nuten und Rippen erfolgt, so daß der Rahmen 1, 1c, 1d, 1e, 1f, 1g leicht und ohne eine besondere Sorgfalt in ein zugeordnetes Magazin einsetzbar ist.

**Patentansprüche**

1. Diarahmen mit längs der Rahmenkante vorgesehener profilierter Randabschnitte, die eine die Rahmenkante bildende Rippe und eine dazu parallele umlaufende Nut aufweisen, dadurch gekennzeichnet, daß die Rippen (1c) nicht bis in die Rahmenecken reichen, so daß die Dicke der Rahmeneckbereiche nur der durch die Nuten bestimmten Rahmenstärke entspricht, und daß die Kanten im Rahmeneckbereich Schrägflächen (1e) aufweisen, die ihnen, im Schnitt (III-III) senkrecht zur Diarahmenebene gesehen, das Profil pfeilförmig nach außen weisender Spitzen verleihen.

2. Diarahmen nach Anspruch 1, dadurch gekennzeichnet, daß die Schrägflächen (1e) der Kanten im Rahmeneckbereich gegen die Rahmenmittelebene unter einem Winkel ($\beta$) von etwa 45° geneigt sind.

3. Diarahmen nach Anspruch 1 oder 2, dadurch gekennzeichnet, daß die Übergangsflächen einer Rippe (1c) in den Rahmeneckbereich und dessen Schrägflächen (1c) Keil- oder Kegelflächen (1g) sind, die eine trichterförmige Erweiterung der an die Rippe (1c) anschließenden Nut (1d) zum Rahmeneckbereich hin bilden.

4. Diarahmen nach einem der vorhergehenden Ansprüche, dadurch gekennzeichnet, daß der eine Nut (1d) zum Rahmeninneren hin begrenzende Rand (1a) des Diarahmens im Rahmeneckbereich unter einem Winkel ($\gamma$) von etwa 45° gegen die Rahmenseiten abgeschnitten ist.

5. Diarahmen nach Anspruch 4, dadurch gekennzeichnet, daß der Übergang zwischen dem unter einem Winkel ($\gamma$) von etwa 45° gegen die Rahmenseite abgeschnittenen Rand (1a) und dem Rahmeneckbereich durch eine nach außen gerichtete Schrägfläche (1f) gebildet wird.

6. Diarahmen nach einem der vorhergehenden Ansprüche, dadurch gekennzeichnet, daß die Schrägflächen (1f) des Randes (1a) zu den Schrägflächen (1e) der Kante des Rahmeneckbereichs etwa parallel verlaufen.

**Claims**

1. Transparency frames with profiled rim portions provided along the frame edges which comprise a rib forming the frame edge and a parallel peripheral groove, characterised in that the ribs (1c) do not reach as far as the corners of the frame, so that the thickness of the frame corner regions corresponds only to the frame thickness determined by the grooves, and the edges in the frame corner region have sloping surfaces (1e) which, as seen in section (III-III) perpendicular to the plane of the transparency frame, form an arrow-shaped profile with the apex pointing outwardly.

2. Transparency frames according to Claim 1, characterised in that the sloping surfaces (1e) of the edges in the frame corner region are inclined to the mid-plane of the frame below an angle ($\beta$) or about 45°.

3. Transparency frames according to Claims 1 and 2, characterised in that the transition surfaces of a rib (1c) in the frame carrier region and its sloping surfaces (1e) are wedge-or cone-surfaces (1g) which form at the frame corner region a funnel-shaped enlargement of the groove (1d) adjoining the rib (1c).

4. Transparency frames according to one of the foregoing claims, characterised in that the rim (1a) of the transparency frame limiting a groove (1d) to the frame interior is cut off in the frame corner region below an angle ($\gamma$) of about 45° to the frame sides.

5. Transparency frames according to Claim 4, characterised in that the transition between the rim (1a) which is cut off below an angle ($\gamma$) of about 45° to the frame side and the frame corner region is formed by means of an outwardly directed sloping side (1f).

6. Transparency frames according to one of the foregoing claims, characterised in that the sloping sides (1f) of the rim (1a) extend approximately parallel to the sloping sides (1e) of the edge of the frame corner region.

**Revendications**

1. Cadre pour diapositive à sections marginales profilées prévues le long des bords du cadre et comportant une nervure formant le bord du cadre et une gorge fermée sur elle-même et parallèle à la nervure, caractérisé par le fait que les nervures (1c) ne s'étendent pas jusqu'aux sommets du cadre, en sorte que l'épaisseur des zones sommitales du cadre ne correspond qu'à l'épaisseur du cadre déterminée par les gorges, et que les bords présentent, dans les zones sommitales du cadre, des surfaces obliques (1e) qui confèrent aux bords, si l'on regarde dans le sens de la coupe (III-III) perpendiculaire au plan du cadre de diapositive, le profil de pointes en forme de flèche dirigées vers l'extérieur.

2. Cadre pour diapositive selon la revendication 1, caractérisé par le fait que les surfaces obliques (1e) des bords sont, dans la zone sommitale du cadre, inclinées d'un angle ($\beta$) d'environ 45° par rapport au plan médian du cadre.

3. Cadre pour diapositive selon les revendications 1 et 2, caractérisé par le fait que les surfaces de transition entre une nervure (1c) et la zone sommitale du cadre et la surface oblique (1e) de cette dernière sont des surfaces en coin ou coniques (1g) qui forment en direction de la zone sommitale un élargissement en forme d'entonnoir de la gorge (1d) qui se raccorde à la nervure (1c).

4. Cadre pour diapositive selon l'une des revendications antérieures, caractérisé par le fait que le bord (1a) de cadre pour diapositive qui délimite une gorge (1d) du côté de l'intérieur du cadre, est découpé, dans la zone sommitale du cadre pour diapositive, sous un angle ($\gamma$) d'environ 45° par rapport au côté du cadre.

5. Cadre pour diapositive selon la revendication 4, caractérisé par le fait que le passage entre le bord (1a) découpé sous un angle ($\gamma$) d'environ 45° par rapport au côté du cadre et la zone sommitale du cadre est formé par une surface oblique (1f) dirigée vers l'extérieur.

6. Cadre pour diapositive selon l'une des revendications antérieures, caractérisé par le fait que les surfaces obliques (1f) du bord (1a) s'étendent à peu près parallèlement aux surfaces obliques (1e) du bord de la zone sommitale du cadre.

Fig. 1

Fig. 2

Fig. 3

Fig. 4